# FASCICULE DE BREVET EUROPEEN

(11) **EP 1 489 794 B1**
(45) Date de publication et mention de la délivrance du brevet: **16.04.2008**
(21) Numéro de dépôt: 04291428.3
(22) Date de dépôt: 08.06.2004
(51) Int. Cl.: H04L 12/56

(54) **Procédé et dispositif de gestion et de stockage de données non-volatiles relatives à un appareil communiquant, par exemple dans un pico-réseau, tel qu'un réseau "Bluetooth"**
Verfahren und Gerät zur Verwaltung und Speicherung nicht volatiler Daten eines Kommunikationsgeräts, zum Beispiel in einem Pico-Netz wie "Bluetooth"
Method and apparatus for administration and storage of non volatile data of a communication apparatus for example in a pico network like "Bluetooth"

(30) Priorité: 19.06.2003 FR 0307416
(43) Date de publication de la demande: 22.12.2004
(73) Titulaire: STMicroelectronics S.A., 92120 Montrouge (FR)
(72) Inventeur: Mastio, Daniel, 38500 Coublevie (FR)
(74) Mandataire: Bentz, Jean-Paul

(56) Documents cités:
- GB-A- 2 372 910
- US-A1- 2002 077 093
- US-A1- 2002 196 029
- US-A1- 2002 196 748

## Description

L'invention concerne un procédé et dispositif de gestion et de stockage de données non-volatiles relatives à un appareil communicant, celui-ci étant par exemple doté d'une interface de communication adaptée à un pico-réseau tel qu'un réseau sans fil au protocole dit "Bluetooth" (défini dans le standard Bluetooth version 1.1 édité en 2001), "Zig bee" ou analogue. Plus particulièrement, l'invention propose un mode de stockage de ces données non-volatiles, lesquelles peuvent comprendre notamment l'adresse dans le réseau du dispositif, connue par la désignation "adresse BD" (ou "BD_Address", abrévié à "BD_ADD" en terminologie anglo-saxonne) dans le cadre du protocole Bluetooth.

Les pico-réseaux sans fil constituent une technologie visant à remplacer les câbles d'interconnexion d'un ensemble fixe ou mobile d'appareils localement reliés dans un rayon typique de l'ordre de 10 m, voire plus. A titre illustratif, les appareils de l'ensemble peuvent être constitués par un poste d'ordinateur central et ses périphériques, tels qu'un clavier, une souris, une imprimante, un assistant personnel numérique (connu également par le terme "PDA" de l'anglais "personal digital assistant"), un téléphone mobile, des appareils audio et vidéo, un serveur, etc.

Fédérant un nombre croissant de fabricants de matériel électronique, le protocole Bluetooth se présente actuellement comme une plateforme universelle pour les pico-réseaux sans fil, permettant de faire communiquer de manière transparente de nombreux différents types d'appareils bureautiques, personnels, domestiques et institutionnels. Par ailleurs, son développement vise des fonctionnalités, telles que la sécurisation des transactions, allant bien au-delà de la simple mise en communication d'appareils groupés à proximité.

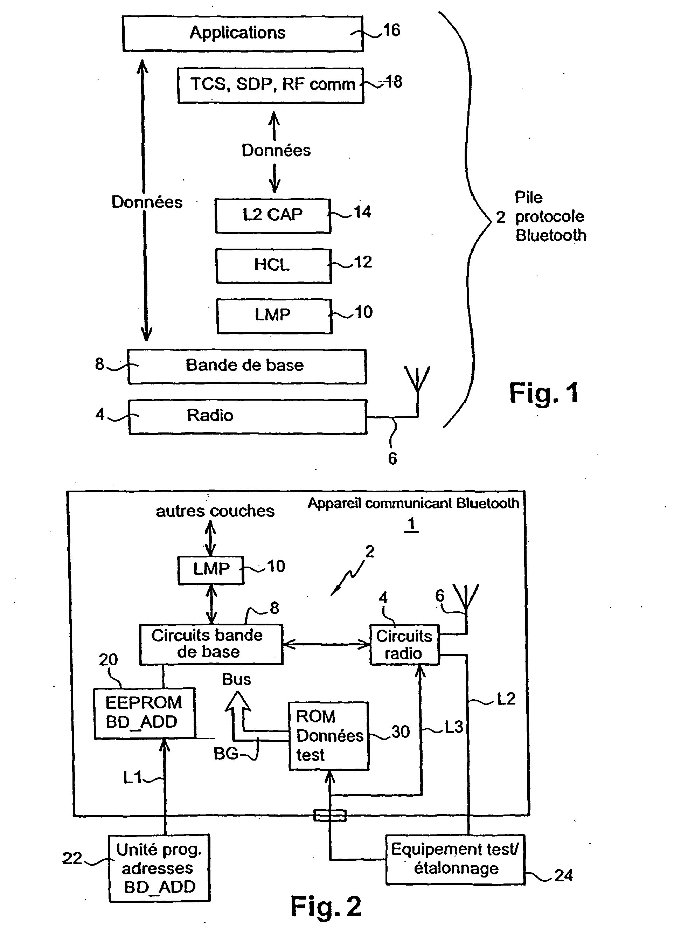

Ainsi que le montre la figure 1, le protocole Bluetooth repose sur une pile de couches protocolaires 2, dont la couche de fond 4, dite couche radio, constitue l'interface de connexion permettant la communication bidirectionnelle sans fil à l'aide d'une antenne 6. Au-dessus de cette couche se trouvent successivement la couche bande de base 8 et une couche protocole de gestion de liaison 10 (connue par le terme de "link manager protocol", ou LMP en terminologie anglo-saxonne). Ces deux couches 8 et 10 servent essentiellement à établir et à contrôler les liaisons entre les différents appareils Bluetooth. Les trois couches précitées 4, 8 et 10 sont généralement implémentées sous forme matérielle ou de micrologiciel ("firmware" en terminologie anglo-saxonne).

Au-dessus de la couche protocole de gestion de liaison 10 se situe la couche contrôleur hôte 12 ("host controller" ou HCL en terminologie anglo-saxonne) nécessaire à l'interface entre les éléments matériels Bluetooth et le protocole supérieur 14 (désigné "logical link control and adaptation protocol" ou L2CAP en terminologie anglo-saxonne). Le contrôleur hôte 12 n'est nécessaire que dans la mesure où le protocole supérieur 14 réside dans l'hôte en tant que logiciel. Si le module Bluetooth comporte lui-même une couche L2CAP, cette couche supérieure 14 peut ne plus être nécessaire, car la couche L2CAP résidente serait alors capable de communiquer directement avec les couches LMP 10 et bande de base 8.

Les applications 16 résident au-dessus la couche L2CAP 14 et communiquent avec celle-ci via une couche logicielle adaptée 18 (TCS, SDP, RFCOMM, etc.).

La bande de base 8 comporte notamment les éléments d'adresse et de sécurisation de l'appareil communicant. Parmi ces éléments, il y a l'adresse unique de l'appareil, désignée BD_ADD (ou "BD_Address") dans la norme Bluetooth, par laquelle l'appareil peut être appelé et peut s'identifier dans le pico-réseau. L'unicité de cette adresse est garantie par l'organisme IEEE ("Institute of Electrical and Electronic Engineers"), qui attribue aux fabricants d'appareils communicants une partie de l'adresse spécifique pour chaque appareil physique mis en circulation.

L'adresse BD_ADD du protocole Bluetooth se présente sous forme de mot binaire de 48 bits, dont 24 bits sont fournis par la IEEE est constituent, pour un fabricant donné, une tranche unique d'adresses à partir de laquelle chaque appareil mis en circulation pourra être singularisé à l'aide des 24 bits complémentaires.

Globalement, une adresse Bluetooth BD_ADD se décompose en : i) une partie inférieure de 24 bits, désignée LAP, ii) une partie non-signifiante de 16 bits désignée NAP, et iii) une partie supérieure de 8 bits désignée UAP.

Au niveau de la couche radio 4 et/ou de la couche bande de base 8, il est nécessaire de prévoir entre autres une série de tests et, le cas échéant, d'étalonnages des circuits radiofréquence pour s'assurer qu'ils s'accordent correctement aux caractéristiques requises pour les modes réception et transmission.

La figure 2 représente sous forme de schéma fonctionnel les éléments intervenant de manière classique dans la phase de mise en service d'un appareil communicant 1 doté d'une interface sans fil Bluetooth 2.

La mise en service comprend une étape d'inscription dans l'appareil de son adresse unique BD_ADD. Cette inscription s'effectue soit en post production, soit en production, mais à un stade final, notamment celui auquel chaque appareil est testé individuellement. En effet, étant donné que cette adresse BD_ADD est de par sa nature différente pour chaque appareil 1, son inscription ne peut pas se faire dans un processus commun de fabrication. On prévoit donc à cette fin une mémoire électriquement programmable 20 logeable dans l'appareil 1, s'agissant typiquement d'une mémoire du type dit EEPROM (de l'anglais "electrically erasable programmable read only memory) comme dans le cas illustré, ou d'une mémoire de type "Flash". Cette mémoire 20 peut, selon les applications, également servir au stockage d'autres données non-volatiles concernant des fonctionnalités de l'appareil 1, par exemple des données de cryptage/décryptgage sous forme de clé.

L'ensemble des données à inscrire dans la mémoire programmable électriquement 20 est fourni par une unité externe 22 de programmation des adresses BD_ADD, qui est fonctionnellement reliée à l'appareil Bluetooth 1 par un lien de communication L1 lors la mise en service. En variante, cette mémoire EEPROM 20 peut être programmée en dehors de l'appareil et insérée dans celui-ci à un stade ultérieur. L'unité de programmation 22 intègre notamment la séquence des adresses BD_ADD à inscrire successivement dans la mémoire programmable 20 de chaque appareil.

Une autre étape dans la mise en service de l'appareil 1 comprend les tests et, le cas échéant, des étalonnages de ses circuits radiofréquence au niveau de la couche radio 4. Pour cette étape, on fait appel à une unité externe 24, désignée ici équipement de test/étalonnage, qui établit une première liaison L2 avec l'appareil Bluetooth au moyen d'un câble radiofréquence. Les données échangées par ce câble servent à déterminer les caractéristiques des signaux des circuits radio, notamment des paramètres critiques qui influent sur la communication (fréquence exacte, puissance d'émission, sensibilité, etc.) et qui sont sujettes à des variations possibles en production ou qui doivent être individualisés.

L'équipement de test/étalonnage 24 est par ailleurs relié d'une part à des entrées de commande logique des circuits radio 4 (liaison numérique L3) et d'autre part à une deuxième mémoire 30 destinée à l'enregistrement des données de test. Typiquement, cette mémoire 30 est également de type EEPROM, et peut se présenter comme une pièce externe logeable dans l'appareil Bluetooth 1. Cette mémoire 30 reçoit pour inscription des données de validation et/ou d'étalonnage, ainsi que d'autres corrections envoyées par l'équipement 24 en fonction de l'analyse des paramètres critiques de communication. Dans le cas le plus simple, la mémoire interne 30 ne stocke pas de données d'étalonnage, mais seulement des données indiquant si les tests on été passés avec succès, éventuellement assorties d'un certificat, des conditions de test, etc. Ceci-ci est notamment le cas lorsque les variations de fabrication sont suffisamment étroites pour que le cahier des charges soit systématiquement respecté si les circuits radio fonctionnent, les tests visant à détecter des dysfonctionnements. En cas de variations individuelles trop importantes, ou de cahier des charges strict, il peut être prévu d'inscrire dans la mémoire 30 des valeurs d'étalonnage qui sont ensuite exploitées lors du fonctionnement de l'appareil 1. De la sorte, celui-ci assurera une communication correcte malgré des éventuelles dérives en fabrication de ses caractéristiques, et restera conforme vis-à-vis d'éventuelles adaptations à l'application prévue.

Le document US2002/0077093 A1 décrit un système pour réaliser la programmation en parallèle d'une mémoire d'un dispositif électronique durant sa fabrication. Le dispositif est programmé en parallèle avec un code de test et une partie du code du système d'exploitation. Le code de test est ensuite utilisé durant des tests du dispositif électronique. Une programmation complémentaire du système d'exploitation est effectuée pour compléter le système d'exploitation présent, puis des tests de système d'exploitation sont effectués.

Le document US2002/0196029 A1 décrit un système pour réaliser un test parallèle de plusieurs dispositifs sans fil utilisant une unique commande sans fil. Chaque dispositif comprend un processeur et une mémoire couplée au processeur. Le système comprend un dispositif de test, comprenant : un émetteur/récepteur communiquant avec chaque dispositif sans fil, un ordinateur connecté à l'émetteur/récepteur et adapté à tester tous les dispositifs sans fil en parallèle en délivrant une unique commande de test utilisant un signal sans fil. L'ordinateur mémorise des motifs de test et des résultats de test.

Au vu de ce qui précède, l'invention propose une approche permettant une meilleure utilisation des ressources mémoire et de l'intégration des données lors de la mise en service d'un appareil communicant.

Plus particulièrement, l'invention prévoit, selon un premier objet, un procédé de réalisation d'une interface de communication sans fil d'un appareil communicant auquel est attribuée une adresse d'identification pour communiquer, l'interface comportant dés circuits radiofréquence et une mémoire prévue pour l'enregistrement de données relatives à une phase de test de fonctionnement des circuits radiofréquence,
caractérisé en ce que :
- on rend ladite mémoire matériellement solidaire des circuits radiofréquence de l'interface de communication, et en ce que
- on inscrit en outre dans ladite mémoire ladite adresse d'identification.

La mémoire peut être intégrée/implantée dans une puce des circuits radiofréquence de l'interface de communication.

Le procédé peut prévoir d'effectuer au moins un test de l'interface de communication et d'inscrire dans la mémoire, dans un ordre quelconque :
- au moins une donnée relative à ce test et
- l'adresse d'identification,
lorsque ladite interface est dans sa forme encapsulée ou habillée.

On peut prévoir d'inscrire l'adresse d'identification dans ladite mémoire avant que les circuits radiofréquence ne soient intégrés aux autres éléments constitutifs de l'interface de communication sans fil.

On peut aussi prévoir d'inscrire l'adresse d'identification dans ladite mémoire après que les circuits radiofréquence aient été intégrés aux autres éléments de l'interface de communication sans fil, et avant l'intégration de cette dernière à l'appareil communicant.

L'appareil peut être du type communicant sur un réseau sans fil, l'adresse d'identification étant l'adresse par laquelle l'appareil est reconnu dans le réseau.

L'appareil peut être du type communicant sur pico-réseau selon le protocole Bluetooth, ou analogue.

Ladite mémoire peut être du type programmable, notamment du type programmable une seule fois (connue par l'appellation anglo-saxonne de OTP pour "one time programmable").

On peut prévoir de stocker en outre dans ladite mémoire d'autres données normalement groupées avec l'adresse d'identification.

On peut ainsi prévoir de stocker en outre dans ladite mémoire au moins l'un parmi :
- des données de cryptage et/ou de décryptage, par exemple une clé,
- des données relatives à un mode de fonctionnement spécifique,
- des données de personnalisation.

Les données relatives à une phase de test de fonctionnement de l'interface peuvent comprendre au moins l'un parmi :
- une indication de la conformité de l'interface vis-à-vis d'un paramètre ou d'un ensemble de paramètres testé(s),
- un certificat de validité conformément au protocole de communication,
- des données d'étalonnage ou de correction des circuits de l'interface de communication.

Selon un deuxième aspect, l'invention concerne une interface de communication sans fil destinée à un appareil communicant auquel est attribuée une adresse d'identification pour communiquer, l'interface comportant des circuits radiofréquence et une mémoire prévue pour l'enregistrement de données relatives à une phase de test de fonctionnement des circuits radiofréquence,
caractérisée en ce que :
- ladite mémoire est matériellement solidaire des circuits radiofréquence de l'interface de communication, et en ce que
- ladite mémoire stocke en outre ladite adresse d'identification.

Les aspects de l'invention présentés dans le cadre du procédé selon le premier aspect peuvent s'appliquer mutatis mutandis à cette interface.

Selon un troisième aspect, l'invention concerne un appareil communicant, caractérisé en ce qu'il incorpore une interface de communication selon le deuxième aspect.

Selon un quatrième aspect, l'invention concerne un procédé d'identification d'un appareil communicant selon le troisième aspect, comprenant une étape de lire et fournir à un requérant ladite adresse d'identification, caractérisé en ce que cette étape comprend la lecture de l'adresse d'identification à partir de ladite mémoire servant en outre pour l'enregistrement des données relatives à la phase de test de fonctionnement de l'interface.

Ce procédé peut comprendre une étape de lire et de fournir à un requérant au moins une autre donnée normalement groupée avec l'adresse spécifique, cette étape comprenant la lecture de ladite autre donnée à partir de ladite mémoire servant en outre pour l'enregistrement des données relatives à la phase de test de fonctionnement de l'interface.

Selon un cinquième aspect, l'invention concerne un appareil destiné à la mise en oeuvre du procédé selon le premier aspect, caractérisé en ce qu'il réunit les fonctionnalités de test des circuits radiofréquence et d'inscription de ladite adresse d'identification, l'appareil ayant un port de connexion dont la sortie est adaptée pour accéder à ladite mémoire pour y inscrire d'une part ladite adresse d'identification d'autre part des données relatives au test.

L'invention et les avantages qui en découlent apparaîtront plus clairement à la lecture de la description qui suit des modes de réalisation préférés, ces derniers servant purement à titre d'exemples non-limitatifs, par référence aux dessins annexés dans lesquels :
- la figure 1, déjà décrite, est un schéma de principe montrant les couches principales qui interviennent dans un pico-réseau sans fil selon le protocole Bluetooth ;
- la figure 2, déjà décrite, est un schéma fonctionnel illustrant les éléments intervenant lors de l'individualisation et du test de la couche radio d'un appareil communicant selon le protocole Bluetooth, conformément à l'état de la technique ;
- la figure 3 est un schéma fonctionnel conforme à un premier mode de réalisation de l'invention, illustrant la réalisation et la préparation d'un appareil communicant selon le protocole Bluetooth ;
- la figure 4 est un schéma fonctionnel conforme à un deuxième mode de réalisation de l'invention illustrant la préparation d'un appareil communicant selon le protocole Bluetooth ;
- la figure 5 est un schéma fonctionnel conforme à un troisième mode de réalisation de l'invention, illustrant la préparation de circuits radio encapsulés d'un appareil communicant selon le protocole Bluetooth.
- la figure 6 est un organigramme des différentes étapes intervenant lors de l'individualisation et les phases de test conformément au premier, deuxième ou troisième mode de réalisation de l'invention ; et
- la figure 7 est un organigramme des différentes étapes lors de la lecture d'une adresse BD_ADD d'un appareil configuré selon le premier, deuxième ou troisième mode de réalisation de l'invention.

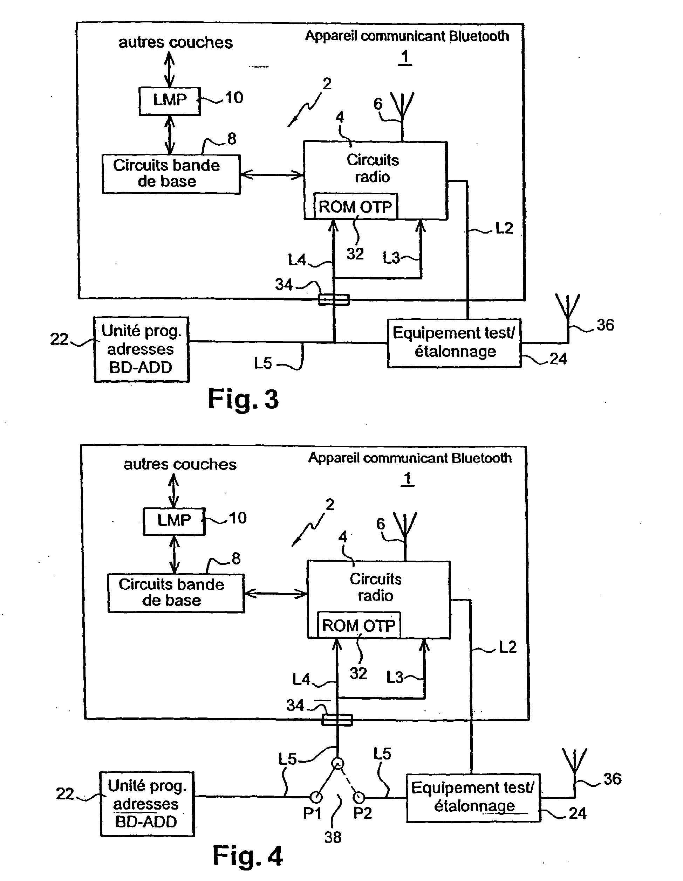

Les éléments des figures 3 à 5 qui sont présents également dans les figures 1 ou 2 sont identifiés par les mêmes références et ne seront donc pas décrits à nouveau par souci de concision, ayant les mêmes rôles et la même conception matérielle, sauf indication contraire. Aussi se référera-t-on aux figures 1 et 2 pour la compréhension de ces éléments.

Dans les modes de réalisation de l'invention, on s'affranchit de la mémoire programmable EEPROM 20 ou analogue classiquement utilisée pour le stockage - entre autres - de l'adresse individuelle BD_ADD de l'appareil communicant 1 à interface Bluetooth 2. En effet, cette adresse, ainsi que toute autre donnée susceptible d'être stockée classiquement dans la mémoire EEPROM 20 ou analogue, est stockée plutôt dans une mémoire polyvalente 32 qui sert aussi au stockage des données de test des circuits de la couche radio 4. Autrement dit, par rapport à l'état de la technique présenté à la figure 2, cette mémoire polyvalente 32 réunit les fonctions à la fois de la mémoire EEPROM 20, servant notamment au stockage de l'adresse BD_ADD, et de la deuxième mémoire 30 servant au stockage des données de test.

La mémoire 32 dans l'exemple est du type ROM programmable une seule fois, ce type étant généralement connue par le terme ROM-OTP (de l'anglais "one-time programmable"). En effet, les opérations de test/étalonnage, ainsi que de l'inscription de l'adresse BD_ADD, n'étant requises qu'une fois pour toute, il est avantageux, en termes de coût et d'intégration, d'utiliser pour la mémoire polyvalente 32 une technologie de type ROM-OTP.

On note par ailleurs que la mémoire ROM-OTP 32 conformément au mode de réalisation est physiquement solidaire des circuits radio 4 de l'interface Bluetooth. Dans l'exemple, les circuits radio sont réalisés sur une ou plusieurs puces, la mémoire ROM-OTP 32 étant alors implantée dans la puce, ou dans l'une des puces, des circuits radio, s'agissant par exemple d'un plan mémoire ménagé à cet effet dans la surface de la puce des circuits radio.

En variante, la mémoire ROM-OTP 32 peut être intégrée dans une puce des circuits bande de base 8, ou des circuits d'autres couches de l'interface Bluetooth 2, qui serait physiquement solidaire des circuits radio, par exemple du fait que cette mémoire 32 se situe dans une carte commune ou dans un boîtier/un encapsulage commun.

Comme le montre la figure 3, le mode de réalisation prévoit une liaison L4 entre les entrées de la mémoire polyvalente 32 et un point de connexion 34 de l'appareil communicant 1, ou plus spécifiquement de l'interface de communication 2, accessible depuis l'extérieur. Dans l'exemple, la liaison L4 est un bus interne qui est par ailleurs relié à la liaison L3 par laquelle l'équipement test/étalonnage 24 échange des signaux logiques avec les circuits radio 4.

Le point de connexion 34 peut prendre la forme d'un port de communication, par exemple du type série, de l'appareil communicant 1, ou d'un ensemble de broches externes du boîtier ou de l'habillage des circuits radio 4, typiquement sous forme de circuit intégré.

Durant la phase de préparation de l'interface de communication 2, le point de connexion 34 est relié en externe par une liaison L5 à la fois à l'équipement test/étalonnage 24 et à l'unité de programmation des adresses BD_ADD 22.

De la sorte, l'unité de programmation 22 est apte à inscrire l'adresse BD_ADD directement dans cette mémoire ROM-OTP 32 en passant successivement par la liaison L5, le point de connexion 34 et la liaison L4. De même, l'équipement test/étalonnage peut inscrire dans la mémoire ROM-OTP 32 les données relatives aux test par les liaisons L5-34-L4, et elle peut aussi commander les circuits radio 4 par les liaisons L5-34-L3. L'échange des signaux radio entre les circuits radio 4 et l'équipement test/étalonnage 24 s'opère par la liaison câblée spécifique L2 apte à véhiculer des signaux radiofréquence, par exemple sous forme de câble coaxial. En variante, cette liaison câblée L2 peut être remplacée par une liaison radio, les signaux radio susmentionnés transitant alors entre l'antenne 6 des circuits radio 4 et une antenne 36 de l'équipement test/étalonnage.

L'inscription de l'adresse BD_ADD dans la mémoire polyvalente ROM-OTP 32 peut se réaliser selon divers modes (avant ou après le stockage des données de test, de certification, d'étalonnage etc.) et à des emplacements de la mémoire OTP 32 qui seront reconnues ensuite comme celles à partir desquels cette adresse BD_ADD doit être extraite. L'organisation et la gestion de ces nouveaux emplacements de stockage dans la mémoire polyvalente ROM OTP 32 est simple pour l'homme du métier et s'intègre parfaitement dans le fonctionnement normal du protocole Bluetooth.

Au besoin, on pourra aisément adapter la capacité de la mémoire ROM-OTP 32 pour y accommoder ces nouvelles données (BD_ADD et autres) selon les applications envisagées.

On peut également réunir l'équipement test/étalonnage 24 et l'unité de programmation des adresses BD_ADD 22 dans un même ensemble polyvalent, par exemple en conférant à la l'équipement test/étalonnage 24 la fonction additionnelle d'inscription des adresses BD_ADD. Dans ce cas, la connexion externe 34 sera reliée, par la liaison externe L5, uniquement à cet ensemble polyvalent.

La figure 4 illustre une variante du premier mode de réalisation, qui en diffère par le fait que la liaison externe L5 avec le point de connexion 34 intègre un commutateur 38 permettant de relier sélectivement à cette liaison externe soit l'unité de programmation d'adresses BD_ADD 22 (position P1), soit l'équipement test/étalonnage 24 (position P2).

Cette disposition permet une programmation en deux phases successives de la mémoire polyvalente ROM-OTP 32 séparées dans le temps: l'une pour l'inscription de l'adresse BD_ADD (et éventuellement d'autres données relatives aux applications) et l'autre pour l'inscription des données de test. Cette approche permet d'espacer à souhait les deux phases et éventuellement de simplifier le câblage des liaisons L4 et L5. Dans tous les cas de figure, l'ordre d'inscription des données de test et de l'adresse BD_ADD est arbitraire.

Il est en outre possible de câbler uniquement l'équipement de test/étalonnage 24 à la connexion externe 34 dans un premier temps, lors d'une phase de test et d'inscription des données de test et, à un autre moment et/ou à un autre lieu, câbler uniquement l'unité de programmation des adresses BD_ADD 22 à cette connexion externe 34, lors de l'inscription de l'adresse BD_ADD.

Comme pour le montage de la figure 3, la liaison radiofréquence câblée L2 peut être remplacée par une liaison hertzienne via les antennes 6 et 36 respectivement des circuits radio 4 et de l'équipement test/étalonnage 24.

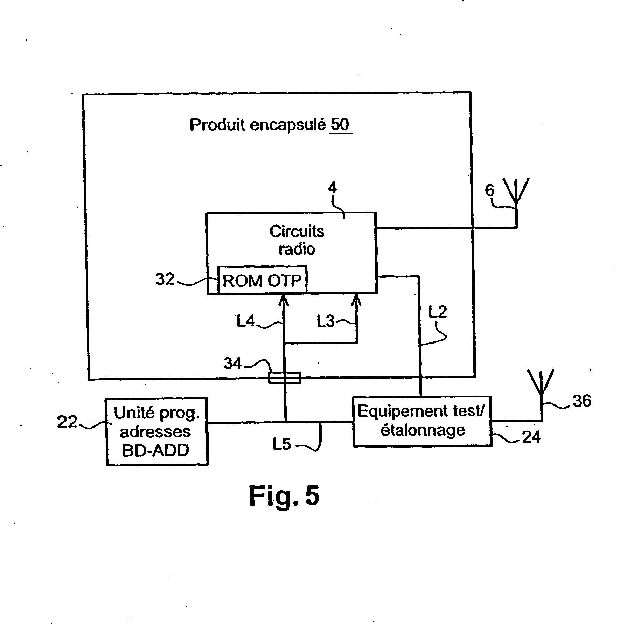

La figure 5 illustre un deuxième mode de réalisation de l'invention, applicable notamment dans un cas de programmation de la mémoire polyvalente ROM OTP 32 lors du test final d'un circuit intégré encapsulé 50 contenant les circuits radio 4. Ces derniers, qui intègrent la mémoire polyvalente ROM-OTP 32, peuvent effectivement être encapsulés ou conditionnés en dehors des autres circuits de l'interface Bluetooth. Le fait que la mémoire 32 fasse partie intégrante du produit ainsi encapsulé 50 permet d'une part d'y réaliser les tests classiques avec l'équipement test/étalonnage 24, et en outre d'y inscrire, au niveau de cette mémoire 32, à la fois les données relatives à ces tests et l'adresse BD_ADD du dispositif communicant auquel ce produit encapsulé 50 est destiné, par l'unité de programmation des adresses 22.

Le produit encapsulé 50, ainsi déjà individualisé par l'adresse BD_ADD, peut alors être intégré ultérieurement avec les autres éléments de l'interface Bluetooth 2, par exemple les circuits bande de base 8.

Le montage de ce deuxième mode de réalisation est sensiblement le même que pour celui de la figure 3 en ce qui concerne les liaisons L3, L4, L5 et la connexion externe 34, qui ne seront pas décrites à nouveau par souci de concision. Cette connexion externe 34 sera bien entendu adaptée en fonction de la forme de réalisation des circuits et du produit encapsulé. Comme pour les montages des figures 3 et 4, la liaison radiofréquence câblée L2 peut être remplacée par une liaison hertzienne via les antennes 6 et 36 respectivement des circuits radio 4 et de l'équipement test/étalonnage 24.

Le fait de réaliser les tests sur un produit déjà encapsulé 50, ou plus généralement dans sa forme habillée, est avantageux pour obtenir lors de ces tests son comportement précis, avec prise en compte de l'environnement matériel des composants.

Bien entendu, on peut prévoir en variante que le produit encapsulé 50 comprenne en outre d'autres éléments, tels que les circuits de la bande de base 8, ou d'autres couches.

Par ailleurs, on comprendra que la variante présentée à la figure 4 peut s'appliquer mutatis mutandis à ce deuxième mode de réalisation.

Les modes de réalisation s'appliquent à tout appareil communicant selon la norme Bluetooth ou à des normes analogues, par exemple le protocole connu par la désignation de "Zig Bee", etc. : ordinateur, périphérique d'ordinateur (imprimante, clavier, scanner, etc.), appareil vidéo ou photo électronique, assistant personnel numérique (PDA), téléphone mobile, de navigation par GPS, carte d'extension adaptable sur des ports d'un PDA ou d'un ordinateur ou autre, appareil domotique, bureautique, industriel, scientifique, etc.

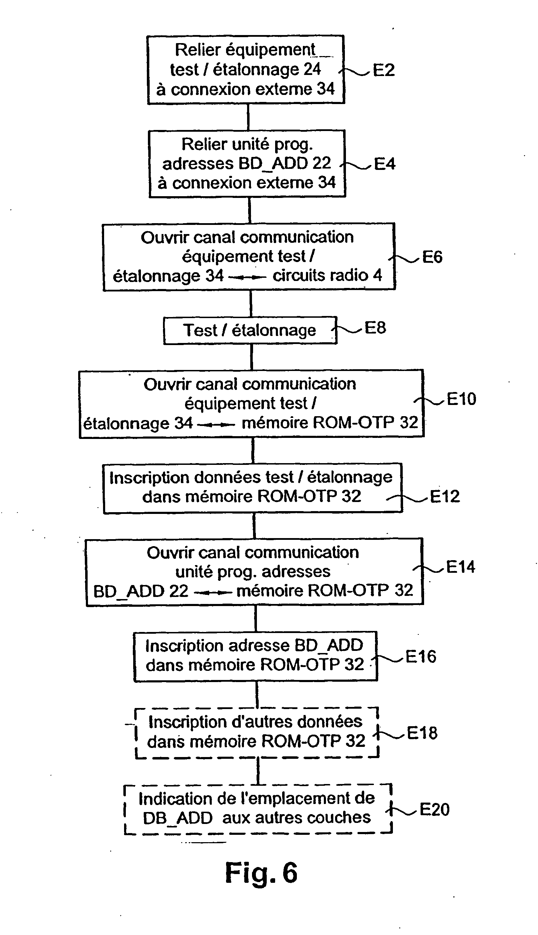

La figure 6 est un organigramme illustrant une manière, parmi de nombreuses autres, de préparer un appareil communicant 1 conformément à la présente invention.

On commence par relier l'équipement de test/ d'étalonnage 24 à la connexion externe 34 (étape E2) au moyen de la liaison externe L5 (cf. figures 3-5). En outre, on relie aussi l'unité 22 de programmation des adresses BD_ADD à cette connexion externe (étape E4), également au moyen de la liaison externe L5 (étape E4).

Dans l'exemple, on commence par la phase de tests/étalonnage. La liaison L5 pouvant servir comme moyen d'interface polyvalent, on ouvre sur celle-ci un canal de communication entre l'équipement test/étalonnage 24 et les terminaux de commande des circuits radio 4 (étape E6), via la liaison L3, afin d'y configurer les modes de test.

On réalise ensuite les tests et éventuellement la détermination des valeurs d'étalonnage à enregistrer (étape E8). A titre indicatif, l'équipement test/étalonnage 24 peut être le modèle commercialisé par la société Rohde & Schwartz sous la référence R&S TS7160, adapté notamment à la norme Bluetooth.

A l'issue de la phase de test, on ouvre un canal de communication entre l'équipement test/étalonnage 24 et la mémoire polyvalente ROM-OTP 32 des circuits radio 4 (étape E10), via la liaison L4.

Ensuite, l'équipement test/étalonnage 24 inscrit dans la mémoire ROM-OTP 32 les données relatives aux tests (étape E12). Comme expliqué plus haut, l'étendu de ces données peut aller d'une simple indication de conformité, éventuellement assortie d'une certification, à des résultats détaillés, et éventuellement des données de correction ou d'étalonnage.

A l'issue de cette phase, on ouvre un canal de communication entre l'unité de programmation des adresses BD ADD 22 et la mémoire ROM-OTP 32 (étape E14), via la liaison L4.

Ensuite, l'unité de programmation des adresses BD_ADD 22 inscrit dans la mémoire ROM-OTP 32 l'adresse individuelle BD_ADD (étape E16) prévue pour l'appareil 1 ou pour les circuits radio (cf. figure 5). Cette inscription s'effectue à une adresse prédéterminée du plan de la mémoire polyvalente ROM-OTP 32, laquelle est rendue connue des couches susceptibles de faire appel à l'adresse BD_ADD. De la sorte, sa lecture s'opère de manière transparente et n'occasionne aucune complication relativement à une lecture classique de l'adresse BD_ADD à partir d'une mémoire dédiée (cf. mémoire EEPROM 20 de la figure 2).

L'inscription de l'adresse BD_ADD peut être accompagnée de l'inscription d'autres données utiles ou nécessaires, telles qu'une clé cryptographique (ou plusieurs), des données de personnalisation, de modes de fonctionnement, etc. (étape E18) et qui, dans une mise en oeuvre classique, seraient susceptibles d'être inscrites dans la mémoire programmable EEPROM 20 ou analogue prévue pour le stockage de l'adresse BD-ADD (cf. figure 2). Le fait qu'il y ait ou non d'autres telles données à inscrire dépend des applications et des conditions, et cette étape E18 peut donc être omise selon les cas, d'où sa représentation en trait pointillés dans la figure 6.

Quelque soit le cas (présence ou pas de l'étape E18), on comprendra que l'approche est la même, à savoir de diriger sur la mémoire ROM-OTP 32 servant au test de la couche radio les données qui auraient ordinairement été stockées dans une mémoire programmable à part.

Si besoin est, l'opération peut être complétée par une étape E20 consistant à charger des données dans l'une des couches du protocole indiquant le fait que l'adresse BD_ADD, et les éventuelles autres données de l'étape E18, doivent être extraites à partir d'emplacements précisées de la mémoire OTP 32. Le caractère facultatif selon les cas de cette étape E20 est indiqué par sa représentation en traits pointillés dans la figure 6).

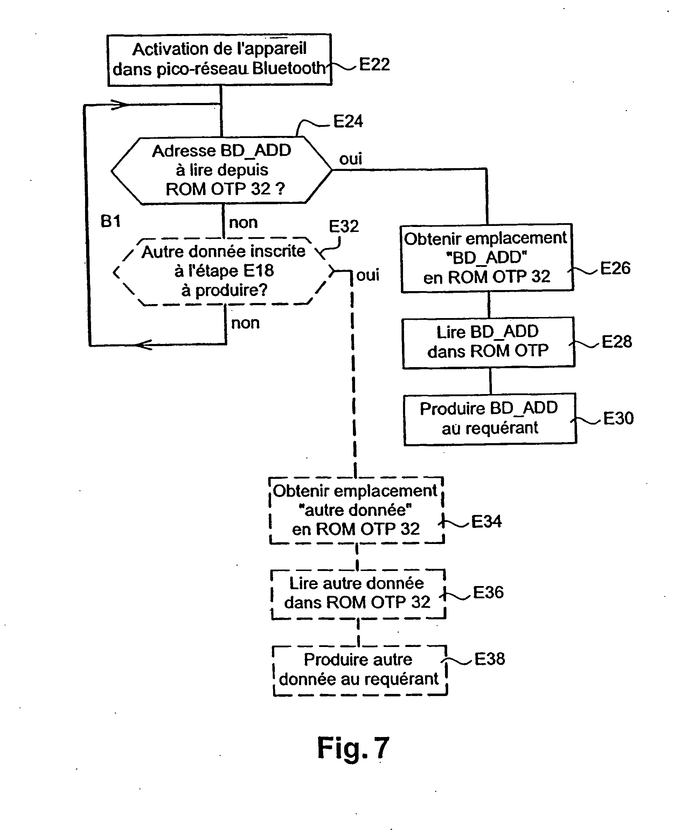

La figure 7 présente, sous forme d'organigramme, une routine permettant à l'appareil 1 de la figure 3, 4 ou 5, préparé conformément à l'organigramme de la figure 6, de produire son adresse BD_ADD lorsque celle-ci est demandée par un requérant. Ce dernier peut s'agir d'une couche interne de l'appareil répondant à une demande d'identification.

La routine est initiée lors d'une activation de l'appareil 1 dans un pico-réseau Bluetooth (étape E22). Typiquement, elle est activée lorsque la bande de base 8 doit lire l'adresse BD_ADD depuis la mémoire ROM-OTP 32, ce qui se produit lors de l'initialisation de l'appareil ou de la bande radio 4, et plus généralement à tout moment opportun auquel la bande de base pourra en faire usage. La routine commence par la veille d'une requête pour lire depuis la mémoire OTP 32 l'adresse BD_ADD, (étape E24 et boucle B1). Lorsqu'une telle requête se présente, la routine recherche l'emplacement de la mémoire OTP 32 à laquelle se situe la donnée BD_ADD (étape E26), par exemple en se référant à un fichier d'adresses de cette mémoire. Elle extrait ensuite la donnée BD_ADD à partir de cet emplacement de la mémoire ROM-OTP (étape E28) et la produit au requérant (étape E30).

Si d'autres données ont été inscrites dans la mémoire OTP 32 lors de l'étape E18 (cf. figure 6), alors la routine peut comporter en outre des étapes équivalentes pour extraire ces données (le caractère facultatif selon les cas de ces étapes est indiqué par sa représentation en traits pointillés dans la figure 7). La boucle B1 intègre alors une veille d'une requête pour lire l'adresse des autres données précitées (ou d'une partie de ces données) (étape E32 et boucle B1). Lorsqu'une telle requête se présente, la routine recherche l'emplacement de la mémoire ROM-OTP 32 à laquelle se situent les données en question (étape E34). Elle extrait ensuite cette autre donnée à partir de cet emplacement (étape E36) et la produit au requérant (étape E38).

Ainsi, conformément à l'invention, il n'est plus nécessaire de prévoir une mémoire programmable à part 20 pour le stockage de l'adresse BD_ADD. Il en résulte une réduction sensible des coûts de fabrication de l'interface communicante et une simplification de la gestion des moyens de mémorisation.

Par ailleurs, le stockage en commun des données de test et d'adresse BD_ADD permet de grouper et de rationaliser les opérations de chargement en mémoire de ces données, d'où des économies de temps en production ou en post production. On peut notamment se servir de l'équipement de test et d'étalonnage pour inscrire en outre dans la mémoire 32 l'adresse BD_ADD de chaque circuit radio 4 testé, en y intégrant les fonctionnalités de l'unité de programmation des adresses BD_ADD 22.

Il est clair que les modes de réalisation décrits se prêtent à de nombreuses variantes matérielles et fonctionnelles, ainsi qu'au niveau de l'ordonnancement des diverses étapes. Par exemple, dans tous le modes de réalisation, on peut prévoir une liaison radio entre les circuits radio et l'équipement de test/étalonnage 24 à la place de la liaison câblée L2.

Par ailleurs, on peut prévoir de rendre la mémoire 32 solidaire des circuits radio 4 tout en la plaçant en dehors de ces circuits, par exemple en les intégrant avec les circuits de la couche bande de base 8, si ces derniers sont eux-mêmes physiquement solidaires des circuits radio.

Dans la description, l'équipement test/étalonnage 24 et l'unité de programmation des adresses BD_ADD 22 ont été présentés comme des éléments séparés. Il est cependant clair qu'il est possible de réunir ces deux éléments 24 et 22 en un seul ensemble, compte tenu du fait qu'ils peuvent désormais être utilisés sur un même poste et en tandem.

On comprendra que l'adresse BD_ADD peut être tout aussi bien être inscrite avant ou après les données de test dans la mémoire 32.

Par ailleurs, l'invention peut aussi s'appliquer à d'autres protocoles de communication - par exemple le protocole "Zig Bee", etc. - où se pose un problème technique analogue et où la solution conforme à l'invention peut être mise à profit.

## Revendications

1. Procédé de réalisation d'une interface de communication sans fil (2) d'un appareil communicant (1) auquel est attribuée une adresse d'identification (BD_ADD) pour communiquer, l'interface (2) comportant des circuits radiofréquence (4) et une mémoire (32),
**caractérisé en ce que** :
- on rend ladite mémoire (32) matériellement solidaire des circuits radiofréquence (4) de l'interface de communication (2), et **en ce que**
- on teste le fonctionnement des circuits radiofréquence puis on enregistre au moins une donnée relative à ce test dans ladite mémoire (32) ;
- on inscrit en outre dans ladite mémoire (32) ladite adresse d'identification (BD_ADD).

2. Procédé selon la revendication 1, **caractérisé en ce que** ladite mémoire (32) est intégrée dans une puce des circuits radiofréquence (4) de l'interface de communication (2).

3. Procédé selon l'une quelconque des revendications 1 ou 2, **caractérisé en ce qu'**il prévoit d'inscrire dans ladite mémoire (32), dans un ordre quelconque par rapport aux autres étapes l'adresse d'identification (BD_ADD) lorsque ladite interface est dans sa forme encapsulée (50) ou habillée.

4. Procédé selon l'une quelconque des revendications 1 à 3, **caractérisé en ce que** l'on inscrit ladite adresse d'identification (BD_ADD) dans ladite mémoire (32) avant que les circuits radiofréquence (4) ne soient intégrés aux autres éléments constitutifs de l'interface de communication sans fil (2).

5. Procédé selon l'une quelconque des revendications 1 à 3, **caractérisé en ce que** l'on inscrit ladite adresse d'identification (BD_ADD) dans ladite mémoire (32) après que les circuits radiofréquence (4) aient été intégrés aux autres éléments de l'interface de communication sans fil (2), et avant l'intégration de cette dernière à l'appareil communicant (1).

6. Procédé selon l'une quelconque des revendications 1 à 5, **caractérisé en ce que** l'appareil (1) est du type communicant sur un réseau sans fil, l'adresse d'identification (BD_ADD) étant l'adresse par laquelle l'appareil est reconnu dans le réseau.

7. Procédé selon la revendication 6, **caractérisé en ce que** l'appareil est du type communicant sur pico-réseau selon le protocole Bluetooth défini dans le standard Bluetooth version 1.1 édité en 2001.

8. Procédé selon l'une quelconque des revendications 1 à 7, **caractérisé en ce que** ladite mémoire (32) est du type programmable, notamment du type programmable une seule fois.

9. Procédé selon l'une quelconque des revendications 1 à 8, **caractérisé en ce** l'on stocke en outre (E18) dans ladite mémoire (32) d'autres données normalement groupées avec l'adresse d'identification (BD_ADD).

10. Procédé selon l'une quelconque des revendications 1 à 9, **caractérisé en ce que** l'on stocke en outre (E18) dans ladite mémoire (32) au moins l'un parmi :
- des données de cryptage et/ou de décryptage,
- des données relatives à un mode de fonctionnement spécifique,
- des données de personnalisation.

11. Procédé selon l'une quelconque des revendications 1 à 10, **caractérisé en ce que** les données relatives à une phase de test de fonctionnement de l'interface comprennent au moins l'un parmi :
- une indication de la conformité de l'interface vis-à-vis d'un paramètre ou d'un ensemble de paramètres testé(s),
- un certificat de validité conformément au protocole de communication,
- des données d'étalonnage ou de correction des circuits de l'interface de communication.

12. Interface de communication sans fil (2) destinée à un appareil communicant (1) auquel est attribuée une adresse d'identification (BD_ADD) pour communiquer, l'interface (2) comportant des circuits radiofréquence (4) et une mémoire (32) matériellement solidaire des circuits radiofréquence (4) de l'interface de communication (2),
**caractérisée en ce que** :
- ladite mémoire (32) est adapté pour stocker en outre ladite adresse d'identification (BD_ADD)et au moins une donnée relative à une phase antérieure de test de fonctionnement des circuits radiofréquence.

13. Interface de communication selon la revendication 12, **caractérisée en ce que** ladite mémoire (32) est du type programmable une seule fois

14. Interface de communication selon l'une quelconque des revendications 12 ou 13, **caractérisée en ce que** ladite mémoire (32) est adapté pour stocker en outre au moins une autre donnée normalement groupée avec l'adresse spécifique (BD_ADD).

15. Interface de communication selon l'une quelconque des revendications 12 à 14, **caractérisée en ce qu'**elle est préparée conformément au procédé selon l'une quelconque des revendications 1 à 11.

16. Appareil communicant (1), **caractérisé en ce qu'**il incorpore une interface de communication (2) selon l'une quelconque des revendications 12 à 15.

17. Procédé d'identification d'un appareil communicant (1) incorporant une interface de communication sans fil comportant une mémoire (32) pour l'enregistrement de données relatives à un test de fonctionnement de circuits radiofréquences de l'interface de communication après la réalisation du test et pour inscrire une adresse d'identification de l'appareil, ledit procédé comprenant une étape (E28) de lire et fournir à un requérant (E30) ladite adresse d'identification (BD_ADD), à partir de ladite mémoire (32).

18. Procédé selon la revendication 17, comprenant une étape (E36) de lire et de fournir (E38) à un requérant au moins une autre donnée normalement groupée avec l'adresse spécifique, **caractérisé en ce que** cette étape (E36) comprend la lecture de ladite autre donnée à partir de ladite mémoire (32) servant en outre pour l'enregistrement des données relatives à la phase de test de fonctionnement de l'interface (2).

19. Equipement de test d'un appareil communicant incorporant une interface de communication sans fil comportant une mémoire (32) pour l'enregistrement de données relatives à un test de fonctionnement de circuits radiofréquences de l'interface de communication après la réalisation du test et pour inscrire une adresse d'identification de l'appareil, **caractérisé en ce qu'**il est adapté à réunir les fonctionnalités de test (24) des circuits radiofréquence et d'inscription (22) de ladite adresse d'identification (BD_ADD), l'appareil ayant un port de connexion dont la sortie est adaptée pour accéder à ladite mémoire (32) pour y inscrire d'une part ladite adresse d'identification d'autre part des données relatives au test.

## Claims

1. Implementation method of a wireless communication interface (2) of a communicating device (1) to which an identification address (BD_ADD) is assigned for communication, the interface (2) including radio frequency circuits (4) and a memory (32) designed to record data relative to an operating test phase of the radio frequency circuits,
**characterised in that**,
- said memory (32) is rendered hardware integrated with the radio frequency circuits (4) of the communication interface (2), and **in that**,
- the radiofrequency circuits operation is tested, then at least one data element relative to said test is stored in said memory (32),
- said identification address (BD_ADD) is further written into said memory (32).

2. Method according to claim 1, **characterised in that** said memory (32) is integrated into a chip of the radio frequency circuits (4) of the communication interface (2).

3. Method according to any one of claims 1 or 2, **characterised in that** it includes writing into said memory (32), in any order with respect to the other stages, the identification address (BD_ADD) when said interface is in its encapsulated (50) or encased form.

4. Method according to any one of claims 1 to 3, **characterised in that** said identification address (BD_ADD) is written into said memory (32) before the radio frequency circuits (4) are integrated to the other elements constituents of the wireless communication interface (2).

5. Method according to any one of claims 1 to 3, **characterised in that** said identification address (BD_ADD) is written into said memory (32) after the radio frequency circuits (4) have been integrated to the other elements of the wireless communication interface (2), and before the integration of the latter with the communicating device (1).

6. Method according to any one of claims 1 to 5, **characterised in that** the device (1) is a type of device that communicates over a wireless network, the identification address (BD_ADD) being the address through which the device is recognized in the network.

7. Method according to claim 6, **characterised in that** this device is the type of device that communicates over a pico-network according to the Bluetooth protocol defined in the Bluetooth standard version 1.1 edited in 2001.

8. Method according to any one of claims 1 to 7, **characterised in that** said memory (32) is a programmable type memory, in particular a one time programmable type memory.

9. Method according to any one of claims 1 to 8, **characterised in that** other data normally grouped with the identification address (BD_ADD) are also stored (E18) in said memory (32).

10. Method according to any one of claims 1 to 9, **characterised in that** at least one of the following is also stored (E18) in said memory (32):
- encryption and/or decryption data,
- data relative to a specific operating mode,
- customisation data.

11. Method according to any one of claims 1 to 10, **characterised in that** the data relative to an interface operating test phase include at least one of the following:
- an indication of the compliance of the interface with respect to a tested parameter or a set of tested parameters,
- a validity certificate according to the communication protocol,
- calibration or correction data of the communication interface circuits.

12. Wireless communication interface (2) designed for a communicating device (1) to which an identification address (BD_ADD) is assigned for communication, the interface (2) including radio frequency circuits (4) and a memory (32) which is hardware integrated with the radio frequency circuits (4) of the communication interface (2), **characterised in that**
- said memory (32)is adapted for also storing said identification address (BD_ADD) and at least one data relative to a prior phase of radiofrequency circuits operating test.

13. Communication interface according to claim 12, **characterised in that** said memory (32) is a one time programmable type memory.

14. Communication interface according to any one of claims 12 or 13, **characterised in that** said memory (32)is adapted for also storing at least one other data element normally grouped with the specific address (BD_ADD) .

15. Communication interface according to any one of claims 12 to 14, **characterised in that** it is prepared in compliance with the method according to any one of claims 1 to 11.

16. Communicating device (1), **characterised in that** it incorporates a wireless communication interface (2) according to any one of claims 12 to 15.

17. Identification method for identifying a communicating device (1) incorporating a wireless communication interface comprising a memory (32) for recording data relative to an operating test of communication interface radiofrequency circuits after performing said test and for writing a device identification address, said method comprising a stage (E28) for reading and providing a claimant (E30) with said identification address (BD_ADD) from said memory 32.

18. Method according to claim 17, including a stage (E36) for reading and providing (E38) a claimant with at least one other data element normally grouped with the specific address, **characterised in that** this stage (E36) includes the reading of said other data element from said memory (32) used additionally to record the data relative to the interface (2) operating test phase.

19. Test equipment for testing a communicating device incorporating a wireless communication interface comprising a memory (32) for recording data relative to an operating test of communication interface radiofrequency circuits after performing said test and for writing a device identification address, **characterised in that** it is adapted for combining the functionalities (24) of testing the radio frequency circuits and of writing (22) said identification address (BD_ADD), the device being equipped with a connection port whose output is adapted to access said memory (32) to write into it, on the one hand, said identification address, and on the other, data relative to the test.

## Patentansprüche

1. Verfahren zur Ausführung einer drahtlosen Kommunikationsschnittstelle einer Kommunikationseinrichtung (1), der zur Kommunikation eine Identifikationsadresse (BD_ADD) zugewiesen ist, wobei die Schnittstelle (2) Hochfrequenzschaltkreise (4) und einen Speicher (32) umfasst,
**dadurch gekennzeichnet, dass**:
- der Speicher (32) mit den Hochfrequenzschaltkreisen (4) mit der Kommunikationsschnittstelle (2) materiell fest verbunden wird, und dass
- die Funktionsweise der Hochfrequenzschaltkreise getestet wird und dann wenigstens ein auf diesen Test Bezug nehmender Datenwert in den Speicher (32) gespeichert wird;
- ferner in den Speicher (32) die Identifikationsadresse (BD_ADD) eingeschrieben wird.

2. Verfahren nach Anspruch 1, **dadurch gekennzeichnet, dass** der Speicher (32) in einen Chip mit Hochfrequenzschaltkreisen (4) der Kommunikationsschnittstelle (2) integriert wird.

3. Verfahren nach einem der Ansprüche 1 oder 2, **dadurch gekennzeichnet, dass** dieses vorsieht, die Identifikationsadresse (BD_ADD) in einer in Bezug auf weitere Schritte beliebigen Reihenfolge in den Speicher (32) einzuschreiben, wenn sich die Schnittstelle in ihrer eingekapselten oder verkleideten Form (50) befindet.

4. Verfahren nach einem der Ansprüche 1 bis 3, **dadurch gekennzeichnet, dass** die Identifikationsadresse (BD_ADD) in den Speicher (32) eingeschrieben wird, bevor die Hochfrequenzschaltkreise (4) mit weiteren Bauelementen der drahtlosen Kommunikationsschnittstelle (2) integriert werden.

5. Verfahren nach einem der Ansprüche 1 bis 3, **dadurch gekennzeichnet, dass** die Identifikationsadresse (BD_ADD) in den Speicher (32) eingeschrieben wird, nachdem die Hochfrequenzschaltkreise (4) mit weiteren Elementen der drahtlosen Kommunikationsschnittstelle (2) integriert worden sind und vor der Integration derselben in die Kommunikationseinrichtung (1).

6. Verfahren nach einem der Ansprüche 1 bis 5, **dadurch gekennzeichnet, dass** die Einrichtung (1) zur drahtlosen Kommunikation in einem Netz vorgesehen ist, wobei die Identifikationsadresse (BD_ADD) die Adresse ist, durch welche die Einrichtung in dem Netz wiedererkannt wird.

7. Verfahren nach Anspruch 6, **dadurch gekennzeichnet, dass** die Einrichtung zur Kommunikation in einem Pico-Netz gemäß dem Bluetooth-Protokoll vorgesehen ist, das in dem in der Version 1.1 aus 2001 veröffentlichten Bluetooth-Standard definiert ist.

8. Verfahren nach einem der Ansprüche 1 bis 7, **dadurch gekennzeichnet, dass** der Speicher (32) programmierbar, insbesondere einmal programmierbar ist.

9. Verfahren nach einem der Ansprüche 1 bis 8, **dadurch gekennzeichnet, dass** ferner (E18) in den Speicher (32) weitere Daten gespeichert werden, die normalerweise mit der Identifikationsadresse (BD_ADD) gruppiert sind.

10. Verfahren nach einem der Ansprüche 1 bis 9, **dadurch gekennzeichnet, dass** ferner (E18) in den Speicher (32) wenigstens gespeichert wird eines von:
- Verschlüsselungs- und/oder Entschlüsselungsdaten,
- Daten in Bezug auf eine spezifische Betriebsweise,
- Personalisierungsdaten.

11. Verfahren nach einem der Ansprüche 1 bis 10, **dadurch gekennzeichnet, dass** die Daten mit Bezug auf eine Funktionstestphase der Schnittstelle wenigstens umfassen eines von:
- einen Hinweis der Konformität der Schnittstelle gegenüber einem Parameter oder einer Gesamtheit von Testparametern,
- ein Gültigkeitszertifikat gemäß dem Kommunikationsprotokoll,
- Markierungs- oder Korrekturdaten der Schaltkreise der Kommunikationsschnittstelle.

12. Drahtlose Kommunikationsschnittstelle (2) für eine Kommunikationseinrichtung (1), welcher eine Identifikationsadresse (BD_ADD) zur Kommunikation zugewiesen ist, wobei die Schnittstelle (2) Hochfrequenzschaltkreise (4) und einen Speicher (32) umfasst, der mit den Hochfrequenzschaltkreisen (4) der Kommunikationsschnittstelle (2) materiell fest verbunden ist,
**dadurch gekennzeichnet, dass**:
- der Speicher (32) so ausgebildet ist, dass dieser ferner die Identifikationsadresse (BD_ADD) und wenigstens einen Datenwert in Bezug auf eine vorhergehende Funktionstestphase der Hochfrequenzschaltkreise speichert.

13. Kommunikationsschnittstelle nach Anspruch 12, **dadurch gekennzeichnet, dass** der Speicher (32) einmal programmierbar ist.

14. Kommunikationsschnittstelle nach einem der Ansprüche 12 oder 13, **dadurch gekennzeichnet, dass** der Speicher (32) so ausgebildet ist, dass dieser ferner wenigstens einen weiteren Datenwert speichert, der normalerweise mit der spezifischen Adresse (BD_ADD) gruppiert ist.

15. Kommunikationsschnittstelle nach einem der Ansprüche 12 bis 14, **dadurch gekennzeichnet, dass** diese gemäß dem Verfahren nach einem der Ansprüche 1 bis 11 ausgebildet ist.

16. Kommunikationseinrichtung (1), **dadurch gekennzeichnet, dass** diese eine Kommunikationsschnittstelle (2) nach einem der Ansprüche 12 bis 15 beinhaltet.

17. Identifikationsverfahren einer Kommunikationseinrichtung (1), die eine drahtlose Kommunikationsschnittstelle beinhaltet, die einen Speicher (32) für die Speicherung von Daten mit Bezug auf einen Funktionstest von Hochfrequenzschaltkreisen der Kommunikationsschnittstelle nach Durchführung des Tests und zum Einschreiben einer Identifikationsadresse der Einrichtung umfasst, wobei das Verfahren einen Schritt (E28) zum Lesen und Liefern der Identifikationsadresse (BD_ADD) aus dem Speicher (32) an einen Abrufer (E30).

18. Verfahren nach Anspruch 17, mit einem Schritt (E36) zum Lesen und Liefern (E38) wenigstens eines weiteren Datenwerts, der normalerweise mit der spezifischen Adresse gruppiert ist, an einen Abrufer, **dadurch gekennzeichnet, dass** dieser Schritt (E36) das Lesen des weiteren Datenwerts aus dem Speicher (32) umfasst, der ferner zu Registrierung der Daten in Bezug auf die Funktionstestphase der Schnittstelle (2) dient.

19. Testeinrichtung einer Kommunikationsvorrichtung, die eine drahtlose Kommunikationsschnittstelle umfasst, mit einem Speicher (32) zur Speicherung von Daten in Bezug auf einen Funktionstest von Hochfrequenzschaltkreisen der Kommunikationsschnittstelle nach der Durchführung des Tests und zum Einschreiben einer Identifikationsadresse der Vorrichtung, **dadurch gekennzeichnet, dass** diese so ausgebildet ist, dass diese die Testfunktionalitäten (24) der Hochfrequenzschaltkreise und der Einschreibung (32) der Identifikationsadresse (BD_ADD) vereinigt, wobei die Vorrichtung eine Anschlussstelle hat, deren Ausgang zum Zugriff auf den Speicher (32) ausgebildet ist, um auf diesem einerseits die Identifikationsadresse und andererseits die Daten mit Bezug auf den Test einzuschreiben.
